# EUROPÄISCHE PATENTANMELDUNG

(11) **EP 1 025 786 A1**
(43) Veröffentlichungstag der Anmeldung: **09.08.2000**
(21) Anmeldenummer: 99101560.3
(22) Anmeldetag: 02.02.1999
(51) Int. Cl.: A47J 36/26, F25B 21/04

(54) **Vorrichtung zur Kühlung und Erwärmung von flüssiger Nahrung, im speziellen von Baby - Flaschennahrung**

(71) Anmelder: Sonntag, Christoph, 71306 Waiblingen (DE)
(72) Erfinder: Sonntag, Christoph, 71306 Waiblingen (DE)

(57) **Zusammenfassung**

Mit der Erfindung wird die Babynahrung in ein und demselben Gerät gleich nach der Herstellung auf Kühlschranktemperatur (circa 5 Grad Celsius) oder sogar Gefriertemperatur herabgekühlt und über Zeitschaltuhr oder ferngesteuert oder durch ähnliches Verfahren die Erwärmung eingeleitet.
Die Vorrichtung besteht aus elastischen, nach außen hin hitzebeständigen, isolierten Metallschichten, die Babynahrung energiesparend durch direkten Kontakt zwischen Metall und Glas kühlen ("Peltier-Effekt") oder erwärmen "Seebeck-Effekt". Elektromagnetische Strahlung (Elektrosmog) tritt bei diesem Prinzip nicht auf.

Mit einer einzigen, leicht zu transportierenden Vorrichtung kann so erfindungsgemäß über 220 oder 12-Volt-Anschluß
· Trinkgefäß und Schnuller abgekocht/sterilisiert werden
· Babynahrung hergestellt/gekocht werden
· Babynahrung direkt nach der Herstellung in derselben Vorrichtung gekühlt oder gefrostet werden
· Diese Babynahrung zum richtigen Zeitpunkt auf Verzehrtemperatur erwärmt werden.

## Beschreibung

### Stand der Technik:

Im allgemeinen: Vorrichtungen zur a) Kühlung und b) Erwärmung von Nahrung existieren zuhauf. Es ist aber nicht bekannt, daß je ein Hersteller versucht hat, Kühlung und Erwärmung von Baby - Flaschennahrung in einem Gerät zu vereinen.

Reine Flaschenwärmer für Babynahrung werden von zahlreichen Herstellern in verschiedenen Ausführungen angeboten. Diese halten die Babynahrung zumeist im Wasserbad bei ständiger Verzehrtemperatur, die ungefähr bei 40 Grad Celsius liegt. Bei diesen Temperaturen jedoch vermehren sich bekanntermaßen Bakterienstämme sehr rasch, weshalb Flaschennahrung - vor allem solche mit frischen Milchbestandteilen - nur wenige Stunden lang derart warm gehalten werden sollte. Es wurde bislang nie versucht, die Babynahrung in ein und demselben Gerät gleich nach der Herstellung auf Kühlschranktemperatur (circa 5 Grad Celsius) oder sogar Gefriertemperatur herabzukühlen und über Zeitschaltuhr oder ferngesteuert oder durch ähnliches Verfahren die Erwärmung einzuleiten.

Die Erfindung vereint vorteilhafterweise die Eigenschaften eines handelsüblichen Babyflaschenwärmers, nämlich die Babynahrung in verzehrfertiger Temperatur ständig bereit zu halten mit den hygienischen Vorteilen der Kühlschranklagerung in ein und derselben Vorrichtung.

Ein weiteres Prinzip kann erfindungsgemäß die Verwendung einer Fernbedienung zur Umschaltung von Kühlen auf Wärmen dienen.

### Funktion der Vorrichtung:

Die Vorrichtung besteht aus elastischen, nach außen hin hitzebeständigen, isolierten Metallschichten, die vorteilhafterweise so geformt sind, daß sie ein Standard - Glasgefäß (oder ein spezielles Glasgefäß) fest und dicht umfassen. Die Metallschichten sind so ausgewählt, daß bei angelegter Spannung, je nach elektrischer Polung, Kühlung oder Erwärmung eintritt. Dieser altbekannte physikalische Effekt wird "Seebeck-Effekt" (Erhitzung) oder, bei umgekehrter Polung, "Peltier-Effekt" (Kühlung) genannt. Um etwa 200 Milliliter flüssige Nahrung zu kühlen oder zu erhitzen, wäre beispielsweise eine Leistungsaufnahme von 100 Watt ausreichend. Elektromagnetische Strahlung (Elektrosmog) tritt bei diesem Prinzip nicht auf. Bei höherer Leistungsaufnahme wären Erwärmung, Kühlung und Zeitdauer der Temperaturänderungen entsprechend intensiver bis zu Kochen und Gefrieren.

### Vorteil der Erfindung:

0 In einer einzigen Vorrichtung wird Kühlen und Erwärmen von flüssiger Nahrung (im speziellen: Babynahrung) möglich. Hygienisch notwendiges Kühlen muß nicht in einem getrennten Gerät (Kühlschrank) erfolgen.
0 Die Vorrichtung erhitzt oder kühlt die Babynahrung ohne umgebendes flüssiges Medium (üblicherweise Wasser) durch den direkten Kontakt zwischen Metall und Glas. Dadurch werden der Transport der Vorrichtung vereinfacht und die einzusetzende Energie reduziert.
0 Wer selbst ein Baby hat, weiß: ein vor Hunger schreiendes Baby schläft am ehesten dann friedlich weiter, wenn es umgehend seine Flaschennahrung erhält. Beim derzeitigen Stand der Technik müssen Eltern, die Babynahrung über die Nacht im Wasserbad warmhalten, hygienische und gesundheitliche Risiken in Kauf nehmen, oder es muß ein Elternteil die Flaschennahrung aus dem Kühlschrank holen und in der Küche erhitzen (oder aber frisch herstellen), während das andere Elternteil versucht, das Baby zu beruhigen: dadurch werden alle drei massiv im Schlaf gestört!
0 Die Anwendbarkeit der Erfindung über beispielsweise einen 12 - Volt - Anschluß erweitert die Möglichkeiten, Babynahrung hygienisch unbedenklich kühl zu halten und rechtzeitig trinkfertig zu erwärmen auf viele Verkehrsmittel (Auto, Zug, Flugzeug), sowie Camping.
0 Da der "Seebeck-Effekt" Erhitzung bis zum Siedepunkt und der "Peltier-Effekt" Kühlung bis zum Gefrierpunkt erlaubt, kann mit der erfindungsgemäßen Vorrichtung in einem einzigen, angesichts der denkbaren Möglichkeiten kompakten Gerät:
   - Trinkgefäß und Schnuller abgekocht / sterilisiert werden
   - Babynahrung hergestellt / gekocht werden
   - Babynahrung direkt nach der Herstellung in derselben Vorrichtung gekühlt oder gefrostet werden
   - Diese Babynahrung zum richtigen Zeitpunkt auf Verzehrtemperatur erwärmt werden.

## Patentansprüche

1. Vorrichtung zur Kühlung und Erwärmung von Flüssigkeiten und flüssigen Nahrungsmitteln, im speziellen Babynahrung, dadurch gekennzeichnet, daß die Wärmeabfuhr und -zufuhr durch Wärmeleitung erfolgt.

2. Vorrichtung nach Anspruch 1., dadurch gekennzeichnet, daß die Vorrichtung aus elastischen, nach außen hin hitzebeständigen, isolierten Metallschichten besteht.

3. Vorrichtung nach Anspruch 1., dadurch gekennzeichnet, daß die nach außen hin hitzebeständigen, isolierten Metallschichten so ausgewählt sind, daß bei angelegter Spannung je nach elektrischer Polung Kühlung oder Erwärmung eintritt.

4. Vorrichtung nach Anspruch 1., dadurch gekennzeichnet, daß der Temperaturzu- oder -abfluß ohne umgebendes flüssiges Medium durch den direkten Kontakt zwischen Metall und Glas stattfindet.

5. Vorrichtung nach Anspruch 1., dadurch gekennzeichnet, daß eine Temperaturregelung der Nahrung mittels Fühlung oder Messung durch Temperatursensoren (bspw. Thermoelement oder Pyrometer) möglich ist.

6. Vorrichtung nach Anspruch 1., dadurch gekennzeichnet, daß eine gleichmäßige Erwärmung oder Kühlung durch Einbringung von Schwingungen erreicht wird.

7. Vorrichtung nach Anspruch 1., dadurch gekennzeichnet, daß die nach außen hin hitzebeständigen, isolierten Metallschichten vorteilhafterweise so geformt sind, daß sie ein Standard - Glasgefäß (oder ein spezielles Glasgefäß) fest und dicht umfassen.

8. Vorrichtung nach Anspruch 1, dadurch gekennzeichnet, daß die nach außen hin hitzebeständigen, isolierten Metallschichten eine Manschette darstellen, die einen speziellen Glasbehälter dicht und beweglich umfassen.

9. Vorrichtung nach Anspruch 1, dadurch gekennzeichnet, daß die nach außen hin hitzebeständigen, isolierten Metallschichten eine mit Federdruck gehaltene oder durch anderes Verfahren größenvariabel gehaltene Manschette darstellen, die unterschiedlich große Glasbehälter dicht und beweglich umfassen.

10. Vorrichtung nach Anspruch 1., dadurch gekennzeichnet, daß bei höherer Leistungsaufnahme Erwärmung, Kühlung und Zeitdauer der Temperaturänderungen entsprechend intensiver ausfallen bis hin zu Kochen und Gefrieren.

11. Vorrichtung nach Anspruch 1, dadurch gekennzeichnet, daß die Vorrichtung geschlossen in einem Kinderteller oder einer Kindertasse Anwendung findet.

12. Vorrichtung nach Anspruch 1, dadurch gekennzeichnet, daß die Vorrichtung mit einer Zeitschaltuhr ausgestattet ist und der Zeitpunkt des elektrischen Polungswechsels (also Erwärmung statt Kühlung oder umgekehrt) mit mechanischer, elektrischer oder anderer Zeitvorwahl vorbestimmt werden kann.

13. Vorrichtung nach Anspruch 1, dadurch gekennzeichnet, daß der Zeitpunkt des elektrischen Polungswechsels (also Erwärmung statt Kühlung oder umgekehrt) auch per Kabel, mit Fernbedienung per Infrarot oder anderer Verfahren bestimmt werden kann.

14. Vorrichtung nach Anspruch 1., dadurch gekennzeichnet, daß der isolierende Kunststoff in Abhängigkeit von seiner Temperatur charakteristische Farben annimmt, aus denen sich die Temperatur der flüssigen Nahrung ableiten läßt.
